(19) Europäisches Patentamt
European Patent Office
Office européen des brevets

(11) Veröffentlichungsnummer: **0 389 661 B1**

(12) # EUROPÄISCHE PATENTSCHRIFT

(45) Veröffentlichungstag der Patentschrift: **10.11.93**

(51) Int. Cl.5: **C02F 1/62**, C02F 1/52, C02F 1/42, C02F 1/28

(21) Anmeldenummer: **89105712.7**

(22) Anmeldetag: **31.03.89**

(54) **Verfahren zur Abtrennung von Arsen aus Abwässern.**

(43) Veröffentlichungstag der Anmeldung:
**03.10.90 Patentblatt 90/40**

(45) Bekanntmachung des Hinweises auf die Patenterteilung:
**10.11.93 Patentblatt 93/45**

(84) Benannte Vertragsstaaten:
**AT BE CH DE ES FR GB IT LI NL SE**

(56) Entgegenhaltungen:
**US-A- 3 414 512**
**US-A- 4 341 636**

**CHEMICAL ABSTRACTS, Band 97, Nr. 2, 12. Juli 1982, Seite 330, Zusammenfassung Nr. 11339w, Columbus, Ohio, US; H. WANG et al.: "Dearsenization of wastewater by the oxidation-precipitation method", & DALIAN GONGXUEYUAN XUEBAO 1982, 21(1), 114**

(73) Patentinhaber: **Walhalla-Kalk Entwicklungs- und Vertriebsgesellschaft mbH**
**Donaustaufer Strasse 207**
**D-93055 Regensburg(DE)**

(72) Erfinder: **Schuster, Georg, Dipl.-Ing. (FH)**
**Hauptstrasse 63**
**D-8409 Tegernheim(DE)**
Erfinder: **Kästle, Hans, Dipl.-Ing (FH)**
**Lerchenbuckl 31**
**D-8411 Laub(DE)**

(74) Vertreter: **Patentanwälte Beetz sen. - Beetz jun. Timpe - Siegfried - Schmitt-Fumian-Mayr**
**Steinsdorfstrasse 10**
**D-80538 München (DE)**

**EP 0 389 661 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein hochwirksames Verfahren zur Abtrennung von Arsen aus Abwässern, insbesondere Industrieabwässern.

Bei zahlreichen industriellen Prozessen fallen mehr oder weniger stark arsenhaltige Abwässer an, deren Aufbereitung unter Abtrennung des Arsens nach dem bisherigen Stand der Technik nicht möglich war.

Bei der Bleikristall- und Kristallglasproduktion wird Arsentrioxid ($As_2O_3$) in einer Menge von bis zu 2 Masse-% der Glasschmelze als Läuterungsmittel zugesetzt. In der Bundesrepublik Deutschland werden für diesen Zweck jährlich etwa 400 to Arsen eingesetzt. Unter den derzeitigen technischen Randbedingungen kann dabei das Arsen nicht ohne weiteres durch ein anderes, unbedenklicheres Läuterungsmittel ersetzt werden. Während ein Teil des eingesetzten Arsens aus der Glasschmelze entweicht, verbleibt ein Anteil von etwa 0,2 Masse-% gebunden in der Glasmatrix. Bei Veredelungsprozessen, bei denen die Glasoberfläche bearbeitet wird, wird jedoch Arsen wieder daraus freigesetzt. Dies geschieht bei der sog. Säurepolitur, bei der das Glas mit Schwefelsäure-Flußsäure-Mischungen behandelt und zum Teil wieder aufgelöst wird, sowie beim Glasschleifen. Säurepolierbäder enthalten etwa 40 bis 100 mg As/l, während Schleifereiabwässer typischerweise etwa 1 mg As/l bzw. bei Kreislaufführung bis zu etwa 10 mg As/l enthalten können.

Arsenhaltige Laugen treten ferner bei der Gewinnung von Nichteisenmetallen auf. So liegt etwa wasserlösliches Arsen in Sodaschlacken bei pyrometallurgischen Verfahren in einer Konzentration von bis zu 4000 mg As/l vor. Auch bei der nassen Abgasreinigung, etwa der Rauchgasentschwefelung, sowie bei Eluaten von Verbrennungsrückständen liegen Lösungen mit relativ hohen Arsenkonzentrationen im Bereich von einigen mg/l vor.

Arsenhaltige Abwässer fallen ferner beispielsweise bei der Mikrochipherstellung bei der Ätzung von Galliumarsenid an.

Infolge der hohen Toxizität des Arsens besteht ein grundlegendes Bedürfnis, die Arsengehalte in entsprechenden Abwässern soweit wie möglich zu reduzieren.

Im Forschungsbericht 10207001/06 von August 1986 des Fraunhofer-Instituts für Silicatforschung, Würzburg, der im Rahmen des Umweltforschungsplans des Bundesministers des Inneren der Bundesrepublik Deutschland erstellt wurde, sind Untersuchungen zur Entfernung von Arsen aus Schleifereiabwässern der Glasindustrie beschrieben. Derartige Abwässer enthalten typischerweise bis etwa 3 mg As/l und bis zu etwa 10 mg Pb/l sowie Kühlmittel, Schmiermittel und Tenside; der pH-Wert solcher Abwässer liegt zwischen 7 und 8.

Im Rahmen dieser Untersuchungen wurden verschiedene grundsätzlich möglich erscheinende Abtrennverfahren für Arsen aus Abwässern systematisch untersucht. Neben Versuchen zur Reduktion des Arsens an der Oberfläche von Metallen, wie Eisen und Zink, wurden Versuche zur Fällung des Arsens als Arsensulfid, als Calciumarsenat, als Eisenarsenat, als Magnesium-Ammonium-Arsenat, als Manganarsenat, als Aluminiumarsenat sowie als Bleiarsenat durchgeführt, wobei nur Abtrennungsgrade $< 50$ % erzielt werden konnten.

Ferner wurden Versuche zur Abtrennung durch Adsorption an titansäurehaltigem Kieselgel, Tonerde und Aktivkohle vorgenommen. Auf Seite 14 des Forschungsberichts ist ausdrücklich festgestellt, daß bei Einsatz von Kieselgel wie auch von Aktivkohle keine nennenswerte Verringerung des Arsengehalts des Abwassers festgestellt werden konnte; lediglich mit Tonerde ergab sich eine geringfügige Verringerung des Arsengehalts, die jedoch als für eine praktische Anwendung zu gering beschrieben ist.

Als einzige einigermaßen erfolgversprechende Methode zur Abtrennung von Arsen ergab sich bei diesen systematischen Versuchen die Fällung mit Eisensalzen mit oder ohne vorherige Oxidation des As(III) zu As(V), durch die bei geeigneten Abwässern eine Verringerung des Arsengehalts von 4 mg/l auf weniger als 0,1 mg/l erreicht werden konnte. Bei Säurepolituraabwässern aus der Glasindustrie, die Arsengehalte bis zu 100 mg/l in stark saurer Lösung enthalten, konnte der Arsengehalt lediglich durch Fällung von Arsensulfiden durch Auflösen von Eisensulfid im sauren Abwasser auf etwa die Hälfte verringert werden (vgl. S. 50 des Forschungsberichts), was bedeutet, daß Proben mit einem Ausgangs-Arsengehalt von etwa 15 mg/l anschließend noch einen Arsengehalt von 6- bis 7 mg/l aufwiesen. Als Konsequenz ist bei dem genannten Stand der Technik aufgrund der umfangreichen Versuche zur Arsenabtrennung festgestellt (vgl. S. 50 des genannten Forschungsberichts), daß selbst die Erarbeitung eines Vorschlags für ein mögliches technisches Verfahren zur Arsenabtrennung noch weitere Laborversuche erfordert; auf Seite 51 dieses Forschungsberichts ist entsprechend darauf hingewiesen, daß für die Arsenentfernung aus Abwässern der Säurepolitur noch kein Verfahrensvorschlag feststeht.

In der Publikation "Umweltfreundliche Technologien bei der Herstellung von Bleikristall- und Kristallglas - Entfernung von Arsen aus Schleifereiabwasser" des Fraunhofer-Instituts für Silicatforschung, Würzburg, ist die Arsenabtrennung aus Abwässern durch Bildung von Eisenarsenat unter Mitfällung in einem Eisenhydroxidniederschlag beschrieben, die nach folgenden Brutto-Reaktionsgleichungen erfolgt:

$Fe^{3+} + 3H_2O\text{-}Fe(OH)_3\downarrow + 3H^+$
$Fe^{3+} + AsO_4^{3-}\text{-}FeAsO_4\downarrow$

Um ein Absinken des pH-Werts durch die zudosierte Eisensulfatlösung zu verhindern, wird mit einer Calciumhydroxid-Suspension neutralisiert, wobei die Sulfationen als Gips ausgefällt werden. Dieses Verfahren erlaubt, allerdings nur bei gering belasteten Schleifereiabwässern, eine Reduzierung des Arsengehalts auf unter 0,1 mg/l, ist jedoch beispielsweise auf Abwässer aus Säurepolierprozessen nicht anwendbar, da in diesen Fällen nur etwa 50 % des enthaltenen Arsens abgetrennt werden können.

In dem ATV-VKS-Merkblatt M 352 (April 1987) "Behandlung und Beseitigung von Skoroditschlamm" wird vorgeschlagen, wasserlösliches Arsen aus pyrometallurgischen Verfahren (Skorodit = Eisenarsenat $FeAsO_4$) in einer Konzentration von 1000 bis 4000 mg/l in schwefelsaurer Lösung mit Hilfe von Chlor in Arsen(V) überzuführen und bei 60 bis 70 °C und pH-Werten < 1 durch Zusatz von Eisensalzen und anschließendes vorsichtiges Anheben des pH-Werts mit Kalkhydrat auf pH 2 bis 2,5 als Eisenarsenat auszufällen. Über den Wirkungsgrad der Fällung bzw. über Restkonzentrationen an gelöstem Arsen sind in diesem Merkblatt keine Angaben gemacht. In den Eluaten werden 0,3 bis 2 mg As/l, 50 bis 300 mg Cu/l, 100 bis 300 mg Zn/l, 1 bis 3 mg Pb/l, 0,1 bis 1 mg Fe/l sowie etwa 500 mg Cl/l gefunden. Die Gehalte an Sulfat und Calcium entsprechen in etwa der Gipslöslichkeit. Auch in dieser Publikation ist darauf hingewiesen, daß keine alkalische Reaktion und keine Reduktionsvorgänge hervorgerufen werden dürfen, um die Löslichkeit von Arsen nicht zu erhöhen.

Die Abtrennung von Arsen aus arsenhaltigen Abwässern nach dem oben erläuterten Verfahren der Ausfällung als Eisenarsenat ist ferner auch Gegenstand von DE-A1-36 32 138 und DE-A1-36 33 066, mit bzw. ohne vorherige Oxidation des dreiwertigen Arsens.

Die Abtrennung von Arsen aus Abwässern durch Ausfällung von Eisenarsenat ist daher nur auf bestimmte, geeignete Abwässer anwendbar und stellt kein allgemein geeignetes Abtrennungsverfahren für Arsen dar.

Aus DE-A1-36 37 643 A1 ist ferner ein Verfahren zur Arsen-Dekontamination wäßriger Lösungen bekannt, das auf der Oxidation von Arsen(III) zu Arsen(V) und der Druckfiltration des Abwassers nach Zugabe eines wasserlöslichen polymeren Anionenaustauschers durch eine Membran beruht. Bei diesem Verfahren wird das Arsen über der Membran angereichert. Als Anionenaustauscher werden nach diesem Verfahren Polymere mit Molmassen von 30 000 bis 100 000 in Verbindung mit Membranen einer Ausschlußgrenze von $10^4$ eingesetzt, beispielsweise Poly(ethylenimine). Die Arsenkonzentration der zu dekontaminierenden Lösung darf dabei nicht höher als 2 mg/l sein, wenn dieses Verfahren nur einstufig angewandt wird. Aufgrund der angewandten Membranfiltrationstechnik eignet sich dieses Verfahren grundsätzlich nicht für eine Anwendung in technisch-industriellem Maßstab.

Aus dem Stand der Technik sind als Adsorptionsmittel zur adsorptiven Abtrennung von Arsen Aktivkohle, Tonerde bzw. Aluminiumoxid sowie Kieselgel bekannt, die jedoch als nicht besonders geeignet beschrieben sind. Eine weitere grundsätzliche Möglichkeit besteht in der adsorptiven Bindung von Arsen an frisch gefälltem Magnesiumhydroxid. Ein Gramm frisch gefälltes Magnesiumhydroxid soll nach Literaturangaben 125 mg Arsen adsorptiv zu binden in der Lage sein. Dieses Adsorptionsvermögen wurde früher bei der Verabreichung von Magnesiumhydroxid als Antidot bei Arsenvergiftungen ausgenutzt.

Wie oben erläutert, ergibt der Stand der Technik ferner, daß Arsen aus wäßrigen Lösungen als Arsensulfid, Calciumarsenat, Eisenarsenat, Manganarsenat, Bleiarsenat und Magnesium-Ammonium-Arsenat gefällt werden kann. Diese Fällungsreaktionen eignen sich jedoch aus den erläuterten Gründen ebenfalls nicht für die großtechnische Aufbereitung arsenhaltiger Abwässer. Hinzu kommt, daß die Eisenarsenate Skorodit, Simplisit und Ferrisimplisit durch Basen zersetzt werden und sämtlich in Säuren löslich sind.

Über die Löslichkeit von Calciumarsenaten liegen in der Literatur teilweise sehr unterschiedliche Angaben vor (Gmelin, Handbuch der anorganischen Chemie, Teil B, 8. Auflage, Verlag Chemie, Weinheim 1956), wie aus der nachstehenden Tabelle 1 hervorgeht.

Tabelle 1

Löslichkeit von Calciumarsenaten in Wasser

| Verbindung | Löslichkeit (mg/l) |
| --- | --- |
| $Ca_3(AsO_4)_2 \cdot 10\ H_2O$ | 170 (20 °C) |
| $Ca_3(AsO_4)_2 \cdot 2\ H_2O$ | 133 (20 °C) |
| $4\ CaO \cdot As_2O_5 \cdot 5\ H_2O$ | 150 (17 °C) |
| $4\ CaO \cdot As_2O_5$ | 120 (17 °C) |
| $4\ CaO \cdot As_2O_5 \cdot H_2O$ | 120 |
| Bei Fällung aus heißen Lösungen: | |
| $As_2O_5$ | 32 |
| $Ca_3(AsO_4)_2$ | 55 |

$Ca_3(AsO_4)_2 \cdot 8H_2O$ gibt bis zu 3 % wasserlösliches Arsenoxid. Basisches Tricalciumarsenat $Ca_3(AsO_4)_2 \cdot Ca(OH)_2$ ist ferner sehr schwer wasserlöslich.

Es ist folglich davon auszugehen, daß Calciumarsenate eine Löslichkeit im Bereich von 60 bis 200 mg/l besitzen, was etwa 20 bis 70 mg As/l entspricht. Calciumsalze sind entsprechend für die Arsenausfällung aus Abwässern nicht geeignet. Ihre Löslichkeit kann zwar durch Zusatz von Zinkionen, Schwermetallionen oder etwa Fluoriden und komplexen Fluoriden gesenkt werden, jedoch kann auch hierdurch keine signifikante Verringerung der Löslichkeit von Calciumarsenaten erzielt werden, wenn von der Problematik solcher Zusätze einmal abgesehen wird.

Aus der Literatur ist ferner, allerdings nicht im Zusammenhang mit der Abwasseraufbereitung, bekannt, daß Calcium-Ammonium-Arsenat und Magnesium-Ammonium-Arsenat schwer löslich sind.

Aus den obigen Gründen wurden, wie auch der oben erläuterte Stand der Technik zeigt, Calcium-Magnesium-Arsenate bisher nicht zur Arsenabtrennung aus Abwässern in Betracht gezogen.

Der Erfindung liegt die Aufgabe zugrunde, ein auf industrielle Abwässer anwendbares Verfahren zur hochwirksamen Abtrennung von Arsen anzugeben, mit dem, praktisch unabhängig von der Herkunft der jeweiligen Abwässer, eine Abtrennung des Arsens auf den Abwasservorschriften entsprechende Endkonzentrationen möglich ist. Das Verfahren soll dabei von billigen, gut verfügbaren Materialien ausgehen, die ihrerseits bzw. deren Endprodukte nicht zu weiteren Umweltproblemen führen, wobei das Verfahren zugleich hinsichtlich des Energie- und Materialverbrauchs in hohem Maße wirtschaftlich arbeiten soll. Das Verfahren soll ferner insbesondere auch für schwer behandelbare Abwässer geeignet sein.

Die Aufgabe wird gemäß den unabhängigen Ansprüchen gelost.

Die abhängigen Ansprüche betreffen bevorzugte Ausführungsformen.

Das erfindungsgemäße Verfahren zur Abtrennung von Arsen aus Abwässern ist gekennzeichnet durch folgende Maßnahmen:

(A1) Ausfällung des Arsens in Form von schwerlöslichen Calcium-Magnesium-Arsenaten durch Zusatz von Calcium- und Magnesiumverbindungen zum Abwasser bei einem pH-Wert von 2 bis 12 und vorzugsweise 9 bis 11 während einer Fällungsdauer von etwa 10 bis etwa 60 min und vorzugsweise etwa 30 min

und

(A2) Abtrennung der Calcium-Magnesium-Arsenate.

Eine vorteilhafte Ausführungsform ist gekennzeichnet durch

(B1) anschließende adsorptive Abtrennung von Arsen durch Inkontaktbringen des erhaltenen Abwassers mit Aktivkohle bei einem pH-Wert von 2 bis 11 und vorzugsweise 2 bis 4

und

(B2) Abtrennung der beladenen Aktivkohle allein oder zusammen mit Fällungsprodukten.

Eine weitere vorteilhafte Ausführungsform des erfindungsgemäßen Verfahrens ist gekennzeichnet durch:

(C1) anschließendes Inkontaktbringen des erhaltenen Abwassers aus A2 oder B2 mit einem Ionenaustauscher, vorzugsweise einem stark basischen Anionenaustauscher, bei einem pH-Wert von 2 bis 12 und vorzugsweise 7 bis 11,5

und ggfs.

(C2) Regeneration des Ionenaustauschers nach Erreichen der Beladungsgrenze.

Bei geeignetem pH-Wert im alkalischen Bereich sowie entsprechendem Überschuß an Magnesiumverbindung wird bei der Fällung in Schritt A1 gleichzeitig Magnesiumhydroxid ausgefällt, was das Trennergebnis günstig beeinflußt.

Die adsorptive Arsenabtrennung in Schritt B1 wird besonders günstig etwa bei pH 3 oder pH 11 durchgeführt.

Eine besonders geeignete Vorrichtung zur Durchführung des oben genannten Verfahrens weist folgende wesentliche Komponenten, auf, wobei die Reaktoren in ihrer Abfolge dem Verfahrensablauf entsprechen:

- Einen Fällungsreaktor, der über eine Verbindungsleitung mit einem Vorratsbehälter für eine Calciumverbindung und einem Vorratsbehälter für eine Magnesiumverbindung verbunden ist und eine pH-Regeleinrichtung aufweist, zur Fällung von Calcium-Magnesium-Arsenaten
  und
- einen Trennreaktor zur Abtrennung der ausgefällten Calcium-Magnesium-Arsenate vom Restabwasser.

Der Fällungsreaktor ist vorteilhaft über eine Verbindungsleitung mit einem Vorratsbehälter für ein Oxidationsmittel verbindbar.

Dem Fällungsreaktor kann ferner ein Adsorptionsreaktor zum Inkontaktbringen des erhaltenen Abwassers mit Aktivkohle, ggfs. mit Regenerationseinrichtung, nachgeschaltet sein.

Ferner kann dem Trennreaktor oder dem Adsorptionsreaktor ein Ionenaustauscher, ggfs. mit Regenerationseinrichtung, nachgeschaltet sein.

Bei der Durchführung des erfindungsgemäßen Verfahrens ist es vorteilhaft, im Abwasser enthaltenes As(III) zu As(V) ($AsO_4^{3-}$) zu oxidieren, was mit geeigneten Oxidationsmitteln, beispielsweise $CaO_2$, $MgO_2$ oder $H_2O_2$, bei pH-Werten im sauren oder alkalischen Bereich erfolgen kann, wobei $H_2O_2$ besonders bevorzugt ist, da es bei der Oxidation in Wasser übergeführt wird. Die Oxidation mit $H_2O_2$ wird ferner bevorzugt bei einem pH-Wert im sauren Bereich durchgeführt. Sie kann auch gleichzeitig mit der Fällung der Calcium-Magnesium-Arsenate oder auch vor diesem Fällungsschritt durchgeführt werden.

Wenn das behandelte Abwasser Sulfationen enthält, die abgetrennt werden müssen, kann dies durch (I) Ausfällung von Calciumsulfat durch Zusatz von $Ca(OH)_2$ zum Abwasser und (II) auschließende Abtrennung des ausgefällten $CaSO_4$ und gegebenenfalls mit ausgefällter Schwermefallhydroxide erfolgen, wobei diese Reaktion, wenn die Ausfällung von $CaSO_4$ vor Schritt A1 vorgenommen wird, bevorzugt bei pH 3 ± 1 durchgeführt wird, während bevorzugt ein pH-Wert von 3 ± 1 bzw. von 8,0 bis 11,0 eingestellt wird, wenn die $CaSO_4$-Ausfällung vor Schritt B1 bzw. C1, also insbesondere nach Schritt A2, vorgenommen wird.

Alternativ oder nach einer vorgeschalteten Sulfatabtrennung durch $CaSO_4$-Ausfällung wie oben erläutert können Sulfate auch durch (III) Ausfällung schwerlöslicher Calciumaluminatsulfate durch Zusatz von reaktivem Aluminiumoxid und/oder Calciumaluminaten, vorzugsweise Tonerdeschmelzzement, zum Abwasser und (IV) anschließende Abtrennung der ausgefällten Calciumaluminat sulfate abgetrennt werden, wobei der pH-Wert bei der Fällung durch Zudosierung von $Ca(OH)_2$ im Bereich von 11,2 bis 11,8 konstantgehalten wird.

Wenn die Vorfällung mit Kalkmilch bei pH 3 ± 1 vorgenommen wird, bleibt das im Abwasser enthaltene Arsen in Lösung. Dieser Umstand ist besonders wichtig, da insbesondere bei hoch sulfathaltigen Abwässern sowie bei konzentrierten Abwässern eine Abscheidung von etwa 75 bis 80 % des gesamten anfallenden Schlamms als $CaSO_4$ in dieser Stufe möglich ist, der nur außerordentlich geringe Gehalte an Schwermetallen und insbesondere Arsen aufweist, so daß solche Schlämme in normalen Deponien wie etwa Bauschuttdeponien abgelagert werden können. Erforderlichenfalls kann in dieser Stufe auch das im Wasser des Preßkuchens enthaltene Arsen durch Waschen entfernt werden.

Gleiches gilt auch für das Fällungsprodukt der Calciumaluminatsulfatfällung.

Diese Verfahrensweise ist aus EP-A1-25 06 26 bekannt.

Nach einer besonders vorteilhaften Ausführungsform des erfindungsgemäßen Verfahrens, die zu einer bisher unerreichten Verringerung der Arsen-Restkonzentration im Ablaufwasser im Bereich von ≦ 0,5 mg As/l führt, wird das vorgereinigte Abwasser, bevorzugt aus Schritt A2, B2, II bzw. IV, mit einem Ionenaustauscher in Kontakt gebracht, vorzugsweise einem stark basischen Anionenaustauscher und bevorzugt bei einem pH-Wert im alkalischen bis neutralen Bereich.

Stark basische Anionenaustauscher sind im allgemeinen vernetzte Polystyrolharze mit makroporöser Struktur, die quaternäre Ammoniumgruppen als funktionelle Gruppen aufweisen. Man unterscheidet hierbei zwei Typen:

Harze vom Typ I mit der aktiven Gruppe $-N(CH_3)_3OH$

und

Harze vom Typ II mit der aktiven Gruppe

$-N[(CH_3)_2\ (C_2H_4OH)]OH$.

Anionenaustauscherharze vom Typ I besitzen gegenüber Anionenaustauscherharzen vom Typ II stärkere Basizität, jedoch geringere Kapazität und schwächer ausgeprägte Regenerationsfähigkeit, wobei andererseits die Oxidationsanfälligkeit geringer ist. Bei Anionenaustauschern des Typs II tritt ferner während der Austauschzyklen im Vergleich zu Austauschern vom Typ I ein stärkerer Schlupf auf.

Die wichtigsten Kenndaten dieser Anionenaustauscher sind:

| | |
|---|---|
| Totalkapazität: | etwa 1,2 val/l feuchtes Harz (beide Typen); |
| nutzbare Kapazität: | 0,4 bis 0,6 val/l feuchtes Harz für Typ I und |
| | etwa 0,7 val/l feuchtes Harz für Typ II. |

Die Affinität dieser Anionenaustauscher gegenüber verschiedenen Anionen entspricht für die OH-Form folgender Reihenfolge:

$I^- > SO_4^{2-} > NO_3^- > CrO_4^{2-} > PO_4^{3-} > AsO_4^{3-}$ > Oxalat > $NO_2^-$, $Cl^-$

> Formiat > Citrat > Tartrat > Phenolat > $F^-$ > Acetat > $HCO_3^- > HSiO_3^-$

$> CN^- > H_2BO_3^- > OH^-$.

Auch makroporöse Anionenaustauscherharze sind zur Anwendung beim erfindungsgemäßen Verfahren geeignet, wobei sich die zusätzlichen Vorteile ergeben, daß makroporöse Anionenaustauscher eine höhere mechanische Beständigkeit aufweisen sowie bessere Aufbereitungsergebnisse und stärkere Beständigkeit gegen Vergiftungen durch mit Kolloiden beladenes Wasser besitzen. Die Beladbarkeit mit organischen Stoffen ist bei makroporösen Austauschern höher als bei herkömmlichen Harzen, wobei auch der Eluierungsgrad bei der Regeneration höher liegt.

Erfindungsgemäß können ferner günstig auch Mischbett-Ionenaustauscher eingesetzt werden, bei denen Kationenaustauscher- und Anionenaustauscherpartikel in ein und derselben Vorrichtung nebeneinander vorliegen. Zur Regeneration werden beide Harze durch hydraulische Aufwirbelung voneinander getrennt, da die beiden Harze unterschiedliche Dichten aufweisen. Nach der Trennung werden die beiden Harze getrennt regeneriert und nach der Regeneration wieder, beispielsweise durch Druckluft, in ein Mischbett übergeführt. Auch der Einsatz von Austauscherpatronen ist vorteilhaft.

Im Vergleich zur Entsalzung in getrennten Austauscherbetten bringt die Entsalzung im Mischbett die Vorteile einer sehr konstanten Wasserqualität, der Anwendbarkeit eines pH-Werts nahe am Neutralpunkt sowie eines geringeren Spülwasserverbrauchs.

Die Regeneration der Ionenaustauscherharze erfolgt nach Erreichen der Beladungsgrenze in üblicher Weise.

Stark basische Anionenaustauscher benötigen zur Überführung in die OH-Form einen großen NaOH-Überschuß, der üblicherweise 200 bis 400 % d. Th. beträgt, in Form einer 4- bis 5-%igen Lösung.

Erfindungsgemäß ist es besonders vorteilhaft, bei Verwendung eines Mischbett-Ionenaustauschers den Anionenaustauscher in der Chloridform und den Kationenaustauscher in der H- Form einzusetzen, da dann die Regenerierung mit Salzsäure als einzigem Regeneriermittel erfolgen kann.

Die adsorptive Abtrennung des Arsens erfolgt bei dem Verfahren gemäß der Erfindung durch Inkontaktbringen des Abwassers mit Aktivkohle. Aktivkohlesorten mit bestimmten, herstellungsbedingten Eigenschaften sind handelsüblich.

Die Arsenadsorption aus dem Abwasser kann sowohl durch Eintragen von pulverförmiger Aktivkohle in das Abwasser in Schritt B1 oder durch Inkontaktbringen des Abwassers mit einem Aktivkohle-Festbett erfolgen, was einer gemeinsamen Durchführung der Verfahrensschritte B1 und B2 entspricht.

Aus verfahrenstechnischen Gründen wie auch aus Gründen der besseren Regenerierbarkeit ist im Rahmen der Erfindung die Verwendung des Aktivkohle-Festbetts bevorzugt.

Die Regenerierung der Aktivkohle erfolgt in bekannter Weise.

Bei der thermischen Regeneration der beladenen Aktivkohle wird günstigerweise das adsorbierte Arsen gewonnen.

Die Fällungsprodukte bzw. Feststoffe aus den Verfahrensschritten A2, B2, II bzw. IV werden vorteilhaft, ggfs. nach Einstellung des pH-Werts, mit Wasser gewaschen, wobei die Waschwässer in das eingesetzte Rohabwasser rückgeführt werden. Die Fällungsprodukte bzw. Feststoffe, insbesondere aus Schritt A2, können gepreßt und in dieser Form entsorgt werden. Gleiches gilt auch für die Schritte II und IV.

Ebenso ist es vorteilhaft, die Regeneratlösungen aus Schritt C2 in die Stufe der Arsenfällung in Schritt A1 oder die Stufe der adsorptiven Abtrennung des Arsens in Schritt B1 rückzuführen.

Vorteilhaft kann das Arsen in den Regeneratlösungen aus Schritt C2 auch in Form von schwerlöslichen Arsenverbindungen, z.B. in Form von Arsensulfiden, abgetrennt werden, wobei die erhaltenen Lösungen in die Stufe der Arsenfällung in Schritt A1 oder die Stufe der adsorptiven Abtrennung des Arsens in Schritt B1 rückgeführt werden können; sie können ferner auch als Regenerierlösungen günstigerweise wiederverwendet werden.

Beim erfindungsgemäßen Verfahren werden Calcium- und Magnesiumverbindungen und insbesondere entsprechende Salze eingesetzt. Eine günstig geeignete Calciumverbindung ist Kalkhydrat; als Magnesiumverbindung eignet sich vorteilhaft Magnesiumhydroxid.

Alternativ dazu können als Magnesiumverbindungen Magnesiumsalze, vorzugsweise Magnesiumchlorid, in Schritt A1 eingesetzt werden.

Bei der oben erläuterten Vorrichtung können die Vorratsbehälter für die Magnesiumverbindung und die Calciumverbindung vorteilhaft auch zu einem einzigen Vorratsbehälter zusammengefaßt sein, aus dem dann die Calcium- und die Magnesiumverbindung in konstantem, vorgegebenem Molverhältnis in den Fällungsreaktor eindosiert werden können.

Ebenso kann es vorteilhaft sein, den Fällungsreaktor und den nachgeschalteten Trennreaktor miteinander zu integrieren.

Der gegebenenfalls vorgesehene Aktivkohle-Festbettreaktor weist günstigerweise eine Regenerationseinrichtung auf, mit der nicht nur die Aktivkohle regeneriert, sondern auch das davon desorbierte Arsen gewinnbar ist.

Die oben erläuterte Vorrichtung weist ferner, sofern sie zur Verarbeitung sulfathaltiger Abwässer vorgesehen ist, günstigerweise einen weiteren Fällungsreaktor auf, der mit Vorratsbehältern für Kalkmilch bzw. Calciumaluminat verbindbar ist und eine pH-Regeleinrichtung aufweist; dieser weitere Fällungsreaktor, dem ein weiterer Trennreaktor nachgeschaltet ist, dient zur Ausfällung von Calciumsulfat bzw. von Calciumaluminatsulfaten, wie oben erläutert. Die Einheit aus dem Fällungsreaktor und dem nachgeschalteten Trennreaktor kann dabei vor dem ersten Fällungsreaktor oder zwischen diesem und dem Adsorptionsreaktor oder dem nachgeschalteten Ionenaustauscher vorgesehen sein.

Die Trennreaktoren sind entweder Sedimentationsreaktoren oder Zentrifugen.

In den Abbildungen 1 bis 4 sind schematische Fließbilder von derartigen Vorrichtungen dargestellt, mit denen bevorzugte Ausführungsformen des erfindungsgemäßen Verfahrens durchgeführt werden können.

In den Abbildungen 1 bis 4 sind die einzelnen Verfahrensstufen mit den gleichen Bezeichnungen wie in der vorstehenden Beschreibung versehen. Die Bezugszahlen bedeuten:

1 Erster Fällungsreaktor und ggfs auch Oxidationsreaktor
2 Vorratsbehälter für Oxidationsmittel
3 Vorratsbehälter für Calciumverbindung
4 Vorratsbehälter für Magnesiumverbindung
5 pH-Regeleinrichtung
6 Trennreaktor zur Abtrennung ausgefällter Calcium-Magnesium-Arsenate
7 Adsorptionsreaktor
8 Ionenaustauscher
9 Weitere Fällungsreaktor zur Sulfatfällung als Calciumsulfat bzw. Calciumaluminatsulfat
10 Vorratsbehälter für Kalkmilch
11 Vorratsbehälter für Calciumaluminat
12 pH-Regeleinrichtung
13 Eindicker
14 Presse
15 Abwasser-Einführungsleitung

Abb. 1 zeigt eine zur Durchführung des erfindungsgemäßen Verfahrens geeignete Vorrichtung zur Arsenabtrennung durch Ionenaustausch mit vorgeschalteter Sulfat- und ggfs. Schwermetallabtrennung durch Fällung. Diese Vorrichtung arbeitet diskontinuierlich im Chargenbetrieb. Die As-Konzentration im Ablauf ist < 0,3 mg/l.

Abb. 2 zeigt eine ebenfalls diskontinuierlich betriebene Vorrichtung zur Arsenabtrennung, bei der nach vorgeschalteter Oxidation des As(III) zu As(V) zunächst Calcium-Magnesium-Arsenate sowie Sulfat und

gegebenenfalls Schwermetalle ausgefällt und abgetrennt werden (A1, A2). Daran schließt sich eine weitere Sulfatfällung und -abtrennung (III, IV) an, die zu einer weiteren Reduzierung des Sulfatgehalts des Restabwassers führt. Nach dem Ionenaustauscher (C1) liegt ebenfalls eine As-Restkonzentration < 0,3 mg/l vor.

Abb. 3 betrifft eine Vorrichtung zur kontinuierlichen Arsenabtrennung und Abwasseraufbereitung. In den Stufen I und II erfolgt die Sulfatabtrennung als $CaSO_4$; daran schließt sich die Fällung von Arsen und Schwermetallen in den Stufen A1 und A2 an, der die weitergehende Sulfatabtrennung in Form von Calciumaluminatsulfaten in den Stufen III, IV folgt. Die Endreinigung geschieht wiederum mit einem Ionenaustauscher in Stufe C1.

Abb. 4 zeigt schließlich eine weitere Vorrichtung zur kontinuierlichen Abwasserbehandlung, bei der zunächst Sulfat (Stufen I, II) und anschließend die Hauptmenge des Arsens durch Fällung als Calcium-Magnesium-Arsenat (Stufen A1, A2) abgetrennt werden. Daran schließt sich eine weitere Sulfatfällung in den Stufen III und IV an, der die Endreinigung im Ionenaustauscher (Stufe C1) folgt.

Statt der Endreinigung mit einem Ionenaustauscher 8 kann auch ein Adsorptionsreaktor 7 vorgesehen sein.

Der Oxidations- und Fällungsreaktor 1 ist vorzugsweise ein Rührkessel mit einem in seinem unteren Teil angeordneten Austrag, der mit einer Schlamm-Sammelleitung für das Fällungsprodukt verbunden ist. Der Oxidations- und Fällungsreaktor 1 ist über Verbindungsleitungen mit einem Vorratsbehälter 2 für das Oxidationsmittel, einem Vorratsbehälter 3 für eine Calciumverbindung und einem Vorratsbehälter 4 für eine Magnesiumverbindung verbunden (Abb. 4) und weist ferner eine pH-Regeleinrichtung 5 auf, mit der eine pH-Kontrolle bzw. pH-Regelung durch Zudosieren eines geeigneten Reagens aus einem entsprechenden Vorratsbehälter möglich ist.

Dem Fällungsreaktor 1 ist ein Trennreaktor 6 nachgeschaltet, in dem die Abtrennung der ausgefällten Calcium-Magnesium-Arsenate vom Restabwasser erfolgt; auch der Trennreaktor 6 kann mit der Schlamm-Sammelleitung verbunden sein. Der Trennreaktor ist vorzugsweise ein Sedimentationsreaktor. Der As-haltige Schlamm wird in der Regel getrennt entwässert und entsorgt.

Der Adsorptionsreaktor 7 umfaßt bevorzugt ein Aktivkohle-Festbett sowie eine Regenerationseinrichtung, mit der die Aktivkohle regeneriert und vorzugsweise auch das desorbierte Arsen gewinnbar ist; er kann anstelle des Ionenaustauschers 8 oder zusätzlich dazu vorgesehen sein, und zwar insbesondere nach Stufe II oder nach Stufe A2.

Dem Adsorptionsreaktor 7 kann ferner ein weiterer Fällungsreaktor 9 prinzipiell gleichen Typs wie der erste Fällungsreaktor 1 nachgeschaltet sein, in dem, unter pH-Regelung mit einer pH-Regeleinrichtung 12, eine Ausfällung von Calciumsulfat und/oder Calciumaluminatsulfaten aus dem Abwasser vorgenommen wird; zu diesem Zweck ist der Fällungsreaktor 9 vorzugsweise über Zuführungsleitungen mit einem Vorratsbehälter 10 für Kalkmilch sowie einem Vorratsbehälter 11 für Calciumaluminat verbunden. An den Fällungsreaktor 9, der in seinem unteren Teil einen Austrag für das Fällungsprodukt aufweist, der mit der Schlamm-Sammelleitung verbunden ist, kann sich ein weiterer Trennreaktor anschließen, in dem die Abtrennung des Fällungsprodukts vervollständigt wird; auch dieser Trennreaktor ist dann mit der Sammelleitung verbunden.

Im Ionenaustauscher 8 erfolgt die Abtrennung zumindest des restlichen Arsens, vorzugsweise in anionischer Form. Der Ionenaustauscher 8 ist vorzugsweise ein Anionenaustauscher und kann ein Mischbett-Ionenaustauscher sein.

Über eine Regeneratleitung kann das Regenerat des Ionenaustauschers 8 in den Prozeß rückgeführt werden.

Bei den dargestellten Ausführungsformen der Abb. 2, 3 und 4 sind zur Schlammaufbereitung ein Eindicker 13 sowie eine Presse 14 vorgesehen, die insbesondere eine Kammerfilterpresse ist.

Die erfindungsgemäß eingesetzte Vorrichtung ist ferner von einer zentralen Steuer- bzw. Regeleinrichtung gesteuert, die insbesondere ein Mikrocomputersystem aufweisen kann. In diesem Fall erfolgt die Prozeßüberwachung durch an entsprechenden Stellen vorgesehene Sensoren und Detektoren, deren Signale einer Zentraleinheit zugeleitet werden, die ihrerseits, nach einem vorgegebenen Programm bzw. Prozeßmodell, entsprechende Stellglieder der Vorrichtung betätigt; auf diese Weise kann das erfindungsgemäße Verfahren weitgehend automatisiert durchgeführt werden. Besonders wichtig ist die Steuerung der Schlammrückführung.

Die Erfindung wird im folgenden anhand von Ausführungsbeispielen näher erläutert, wobei auf Vergleichsversuche Bezug genommen wird.

Für die Versuche wurden sehr verschiedene Industrieabwässer (Abwässer I bis IX) sowie zwei synthetische Abwässer (synthetische Abwässer I und II) eingesetzt.

Die Industrieabwässer stammten aus verschiedenen Säurepolierprozessen der Glasindustrie. Sie enthielten dieselben Inhaltsstoffe, unterschieden sich jedoch durch die Konzentration der einzelnen Stoffe und

insbesondere solcher, die sich bei Kreislaufführung anreichern können. Aus Vorversuchen war bekannt, daß entsprechende Abwässer dann schwer zu behandeln sein können, wenn sie hohe Alkaligehalte, insbesondere an Na und K, aufweisen. Aus diesem Grund wurden solche Industrieabwässer gewählt, die als leicht, mittelschwer bzw. schwer behandelbar anzusehen waren.

Die Zusammensetzung der eingesetzten Rohabwässer vor der jeweiligen Behandlung ist in Tabelle 2 angegeben.

Tabelle 2

| Abwasserart | As (mg/l) | Pb (mg/l) | Na (mg/l) | K (mg/l) | F (mg/l) | Tensidzusatz ml/l | Bewertung |
|---|---|---|---|---|---|---|---|
| Abwasser I | 12,03 | 8,00 | 63,5 | 139,4 | - | - | leicht behandelbar |
| Abwasser II | 17,01 | 5,60 | 109,6 | 219 | - | - | leicht behandelbar |
| Abwasser III | 24,30 | 5,00 | 1063 | 325 | - | - | schwer behandelbar |
| Abwasser IV | 28,5 | - | 318 | 246 | - | - | mittelschwer behandelbar |
| Abwasser V | 33,5 | - | 181 | 884 | - | - | schwer behandelbar |
| Abwasser VI | 6,9 | 11,5 | 70 | 120 | - | - | leicht behandelbar |
| Abwasser VII | 14,0 | 6,2 | 93 | 180 | - | - | mittelschwer behandelbar |
| Abwasser VIII | 10,6 | - | 397 | 448 | - | - | schwer |
| Abwasser IX | 22,4 | - | 769 | 589 | - | - | schwer |
| Synth. Abw.I | 163,3 | - | >1000 | >1000 | >1000* | 1 | leicht |
| Synth. Abw.II | 15,7 | - | >1000 | >1000 | >1000** | 1 | leicht |

* eingesetzt als $F^{\ominus}$,
** eingesetzt als $H_2SiF_6$
- nicht bestimmt bzw. kein Zusatz

Im Rahmen der Untersuchungen wurde versucht, As(III) bzw. As(V) aus den Lösungen mit verschiedenen Fällungsreaktionen bzw. durch Adsorption oder durch Ionenaustausch abzutrennen.

Die As-Bestimmung erfolgte durchwegs durch Atomadsorptionsspektrometrie (Graphitrohrtechnik Ni/As; Analysenfehler je nach Konzentration 1 bis 5 %).

Durch Zusatz von $F^{\ominus}$ und $H_2SiF_6$ sollte ein etwaiger nachteiliger Einfluß von komplex gebundenem Arsen ermittelt werden; eine Störung der Fällungsreaktionen bzw. der As-Adsorption konnte jedoch nicht festgestellt werden.

Durch Zusatz von Tensiden sollte ferner ermittelt werden, ob solche grenzflächenaktiven Mittel die Fällung der Calcium-Magnesium-Arsenatestören; es konnte jedoch kein negativer Einfluß solcher Zusätze festgestellt werden.

## Vergleichsbeispiel 1

Aus verschiedenen Abwässern wurde Arsen mit Kalkhydrat ( $Ca(OH)_2$ ) bei pH 10,5 bis 11,0 bei Raumtemperatur ausgefällt.

Die erhaltenen Ergebnisse sind in Tabelle 3 zusammengefaßt.

Der Restgehalt der Abwässer an Arsen ist zusätzlich zu den Konzentrationen auch in Prozent der Ausgangs-Arsenmenge (100 %) im eingesetzten Rohabwasser angegeben. Der As-Abtrennungsgrad entspricht dem Prozentsatz des abgetrennten As, bezogen auf den As-Anfangsgehalt im Rohabwasser.

Tabelle 3

| Abwasserart | As (mg/l) | Rest-As (%) | As-Abtrennungsgrad (%) | Pb (mg/l) | Na (mg/l) | K (mg/l) |
|---|---|---|---|---|---|---|
| Abwasser I | 2,35 | 19,5 | 80,5 | <0,1 | 10,2 | 115,2 |
| Abwasser II | 3,5 | 20,6 | 79,4 | <0,1 | 27,6 | 118,3 |
| Abwasser III | 15,0 | 61,7 | 38,3 | - | 919 | 274 |
| Abwasser IV | 12,9 | 45,3 | 54,7 | - | 264 | 246 |
| Abwasser V | 23,9 | 71,3 | 28,7 | - | 159 | 837 |
| Abwasser VI | 3,0 | 43,5 | 56,5 | - | 70 | 120 |
| Synth. Abwasser I | 2,0 | 1,2 | 98,8 | - | >1000 | >1000 |
| Synth. Abwasser II | 0,2 | 1,3 | 98,7 | - | >1000 | >1000 |
| - nicht bestimmt | | | | | | |

**Vergleichsbeispiel 2**

Bei diesem mit Abwasser VI durchgeführten Versuch (As-Gehalt 6,9 mg/l - vgl. Tabelle 4) wurde das Arsen ebenfalls mit $Ca(OH)_2$ ausgefällt, wobei die Fällung ohne Oxidation (Versuche A) sowie mit alkalischer Oxidation (Versuche B) bzw. mit saurer Oxidation des As(III) zu As(V) (Versuche C) durchgeführt wurde.

Der pH-Wert bei der $Ca(OH)_2$-Fällung betrug jeweils 9,0; die Fällung wurde jeweils bei 25 °C 45 min lang durchgeführt.

Bei den Versuchen B wurde das Oxidationsmittel $H_2O_2$ in alkalischem Medium zugegeben, während bei den Versuchen C die Oxidation in saurem Medium vorgenommen und anschließend der pH-Wert zur Fällung auf pH 9 erhöht wurde.

Diese Versuche wurden mit verschiedenen Zusatzmengen an 35-%iger wäßriger $H_2O_2$-Lösung pro Liter Abwasser durchgeführt. Die erhaltenen Ergebnisse sind in Tabelle 4 zusammengefaßt. Der prozentuale Rest-As-Gehalt ist wiederum auf den Ausgangs-As-Gehalt (100 %) bezogen.

Der prozentuale As-Abtrennungsgrad ist komplementär zum prozentualen Rest-As-Gehalt und entspricht dem Prozentsatz an abgetrenntem As, bezogen auf den Ausgangs-As-Gehalt.

Tabelle 4

| Reaktionsbedingungen | Ausgangs-As (mg/l) | Rest-As (mg/l) | Rest-As (%) | As-Abtrennungsgrad (%) |
|---|---|---|---|---|
| **Versuche A** (ohne Oxidation): | 6,9 | 2,8 | 40,6 | 59,4 |
| | 6,9 | 3,3 | 47,8 | 52,2 |
| **Versuche B** (alkalische Oxidation): $H_2O_2$, 35 %: | | | | |
| 1 ml/l | 6,9 | 1,4 | 20,3 | 79,7 |
| 3 ml/l | 6,9 | 1,5 | 21,7 | 78,3 |
| 5 ml/l | 6,9 | 1,5 | 21,7 | 78,3 |
| 7 ml/l | 6,9 | 1,7 | 24,6 | 75,4 |
| **Versuche C** (saure Oxidation): $H_2O_2$, 35 %: | | | | |
| 1 ml/l | 6,9 | 1,7 | 24,6 | 75,4 |
| 3 ml/l | 6,9 | 1,8 | 26,1 | 73,9 |
| 5 ml/l | 6,9 | 1,4 | 20,3 | 79,7 |
| 7 ml/l | 6,9 | 1,7 | 24,6 | 75,4 |

Die Ergebnisse zeigen, daß die Oxidation von As(III) zu As(V) in jedem Fall den Abtrennungsgrad erheblich verbessert (von etwa 50 bis 60 auf etwa 74 bis 80 %), wobei zwischen der alkalischen und der sauren Oxidation keine signifikanten Unterschiede bestehen.

Ferner ist ersichtlich, daß die angewandten Dosiermengen an $H_2O_2$ nicht von relevantem Einfluß sind.

Eine Verlängerung der Reaktionsdauer über 45 min hinaus brachte ferner keine besseren Ergebnisse.

Dem Zusatz des Oxidationsmittels $H_2O_2$ bei einem pH-Wert im sauren Bereich ist der Vorzug zu geben, da dann eine ausreichende Reaktionszeit sichergestellt ist und kein Oxidationsmittel in den Ionenaustauscher gelangen kann.

**Beispiel 1 und Vergleichsbeispiel 3**

Beispiel 1 bezieht sich auf die Abtrennung des Arsens aus Abwässern durch Ausfällung schwerlöslicher Calcium-Magnesium-Arsenate entsprechend den Stufen A1 und A2 des erfindungsgemäßen Verfahren durch gleichzeitige Verwendung von Calcium- und Magnesium-Verbindungen als Fällungsmittel.

Vergleichsbeispiel 3 bezieht sich auf die Arsenfällung allein mit der Calciumverbindung.

Als Calcium-Verbindung diente jeweils Kalkmilch ($Ca(OH)_2$).

Als Magnesium-Verbindung wurde jeweils $Mg(OH)_2$ eingesetzt.

Das Molverhältnis der Fällungsmittel, bezogen auf As, war wie folgt: $Ca:Mg:AsO_4$ = 3:3:1.

Die Fällungen wurden jeweils bei 25 °C 30 min bei pH > 10,5 durchgeführt. In den Versuchen wurden die Abwässer IV und VII (vgl. Tabelle 4) als mittelschwer behandelbare Abwässer und Abwasser VI als leicht behandelbares Abwasser eingesetzt.

Dem sauren Rohabwasser wurden zunächst die entsprechenden Verbindungen zugesetzt, worauf der pH-Wert auf > 10,5 angehoben und die Fällung durchgeführt wurde.

Die erhaltenen Ergebnisse sind in Tabelle 5 zusammengefaßt.

Tabelle 5

| | Abwasser IV | | | Abwasser VII | | | Abwasser VI | | |
|---|---|---|---|---|---|---|---|---|---|
| | Ausgangs-As (mg/l) | Rest-As (mg/l) | As-Abtrennungsgrad (%) | Ausgangs-As (mg/l) | Rest-As (mg/l) | As-Abtrennungsgrad (%) | Ausgangs-As (mg/l) | Rest-As (mg/l) | As-Abtrennungsgrad (%) |
| Vergleichsbeispiel 3 | 28,5 | 19,9 | 30,2 | 14,0 | 8,0-9,0 | 35,7-42,9 | 6,9 | 3,0 | 56,5 |
| Beispiel 1 | 28,5 | 16,6 | 41,8 (+11,6) | 14,0 | 5,4-6,0 | 57,1-61,4 (+14,2/25,7) | 6,9 | 2,2 | 68,1 (+11,6) |

Die Ergebnisse von Tabelle 5 zeigen, daß das erfindungsgemäße Verfahren des Beispiels 1, bei dem eine Kombination von Calcium- und Magnesium-Verbindung verwendet wurde, zu einem signifikant verbesserten Fällungsergebnis führt, wenn mit dem unter sonst gleichen Bedingungen durchgeführten Vergleichsbeispiel 3 verglichen wird, bei dem nur die Calcium-Verbindung eingesetzt wurde.

In den Spalten, in denen der As-Abtrennungsgrad angegeben ist, ist bei den Zahlenwerten des Beispiels 1 jeweils in Klammer der gegenüber dem Vergleichsbeispiel 3 erzielte zusätzliche As-Abtrennungsgrad in Prozent angegeben.

**Beispiele 2 und 3 und Vergleichsbeispiel 4**

Die Versuche beziehen sich, für vier verschiedene Abwässer, auf den Vergleich der reinen Calciumarsenat-Fällung (Vergleichsbeispiel 4) mit dem erfindungsgemäßen Verfahren, bei dem die Abwässer ohne Oxidation (Beispiel 2) sowie nach vorheriger Oxidation mit $H_2O_2$ (Beispiel 3) der Fällung in Gegenwart von Calcium- und Magnesium-Verbindungen unterzogen wurden.

Die Oxidation wurde im sauren pH-Bereich durchgeführt.

Als Calcium-Verbindung wurde $Ca(OH)_2$ eingesetzt; als Magnesium-Verbindung diente $Mg(OH)_2$.

Die Abwässer IV und VII waren mittelschwer zu behandelnde Abwässer, die Abwässer VIII und IX schwer behandelbare Abwässer. Die erhaltenen Ergebnisse sind in Tabelle 6 zusammengestellt.

Tabelle 6

| | Abwasser VIII | | | Abwasser VII | | | Abwasser IX | | | Abwasser IV | | |
|---|---|---|---|---|---|---|---|---|---|---|---|---|
| | Ausgangs-As (mg/l) | Rest-As (mg/l) | As-Abtrennungsgrad (%) | Ausgangs-As (mg/l) | Rest-As (mg/l) | As-Abtrennungsgrad (%) | Ausgangs-As (mg/l) | Rest-As (mg/l) | As-Abtrennungsgrad (%) | Ausgangs-As (mg/l) | Rest-As (mg/l) | As-Abtrennungsgrad |
| Vergleichsbeispiel 4 | 10,6 | 8,9 | 16,0 | 14,0 | 8,0-9,0 | 35,7-42,9 | 22,4 | 17,6 | 21,4 | 28,5 | 20 | 29,8 |
| Beispiel 2 | 10,6 | 7,7 | 27,4 (+11,4) | 14,0 | 5,4-6,0 | 57,1-61,4 (+14,2/25,7) | 22,4 | 16,8 | 25,0 (+0,6) | 28,5 | 16,6 | 41,8 (+12,0) |
| Beispiel 3 | 10,6 | 5,2 | 50,9 (+34,9) | 14,0 | 1,2-2,2 | 84,3-91,4 (+22,9/34,3) | 22,4 | 13,8 | 38,4 (+17,0) | 28,5 | 6,2 | 78,3 (+48,5) |

Die Ergebnisse von Tabelle 6 zeigen die signifikante Verbesserung, die das erfindungsgemäße Verfahren der Beispiele 2 und 3 gegenüber der Calciumarsenat-Fällung (Vergleichsbeispiel 4) mit sich bringt, und zwar sowohl für mittelschwer als auch für schwer behandelbare Abwässer, wobei das Trennergebnis im Fall der Oxidation des Arsens im Abwasser zu As(V) (Beispiel 3) gegenüber Beispiel 2 wiederum in ausgeprägtem Maße verbessert ist.

In den auf den As-Abtrennungsgrad bezogenen Spalten ist bei den Beispielen 2 und 3 wiederum in Klammern der gegenüber Vergleichsbeispiel 4 zusätzlich erzielte Arsenabtrennungsgrad angegeben.

## Vergleichsbeispiel 5

Dieses Vergleichsbeispiel bezieht sich auf die adsorptive Abtrennung von Arsen aus Abwässern durch Inkontaktbringen mit Aktivkohle, also auf die isolierten Verfahrensschritte B1 und B2 des erfindungsgemäßen Verfahrens.

Bei den Versuchen wurde ein industrielles, stark sulfationenhaltiges Abwasser eingesetzt (Abwasser V).

Aus diesem Abwasser wurde zunächst durch Zusatz von $Ca(OH)_2$ bei pH 3,0 während 30 min dies Sulfat als $CaSO_4$ ausgefällt; der ausgefallene Schlamm wurde abgetrennt.

Das resultierende vorgereinigte Abwasser, das einen As-Gehalt von 33,5 mg As/l aufwies, wurde dann nach pH-Einstellung durch $Ca(OH)_2$-Zusatz mit verschiedenen Mengen Aktivkohle versetzt, worauf der As-Gehalt jeweils nach 30 min im Überstand ermittelt wurde.

Die erhaltenen Resultate sind Tabelle 7 zu entnehmen.

Tabelle 7

| Menge Aktivkohle (g/l) | pH bei Adsorption | Ausgangs-As (mg/l) | Rest-As (mg/l) | As-Abtrennungsgrad (%) |
|---|---|---|---|---|
| 0 | 3 | 33,5 | 33,5 | 0 |
| 5 | >10,5 | 33,5 | 21,7 | 35,2 |
| 10 | >10,5 | 33,5 | 13,5 | 59,7 |
| 15 | >10,5 | 33,5 | 0,8 | 97,6 |

Die Ergebnisse zeigen, daß, im Gegensatz zu der eingangs erläuterten Literaturmeinung, die adsorptive Arsenabtrennung mit Aktivkohle außerordentlich wirksam ist, da mit entsprechenden Aktivkohlemengen außerordentlich hohe As-Abtrennungsgrade (z.B. 97,6 % mit 15 g Aktivkohle pro Liter) erzielbar sind.

Im Rahmen der Adsorptionsversuche ergab sich ferner, daß der Wirkungsgrad der As-Adsorption an Aktivkohle praktisch unabhängig vom pH-Wert des Mediums ist, mit dem die Aktivkohle in Kontakt gebracht wird; der Trennwirkungsgrad ist ferner auch davon unabhängig, ob die Aktivkohle abgetrennt wird oder nicht.

Aus wirtschaftlichen Überlegungen heraus ist eine Adsorption bzw. Abtrennung der Aktivkohle bei pH 3 ± 1 günstig, wobei die Verwendung eines regenerierbaren Aktivkohle-Festbettfilters am günstigsten ist, mit dem die Verfahrensschritte B1 und B2 gleichzeitig durchgeführt werden können.

Da 1 kg Aktivkohle 1,2 bis 1,6 g As adsorbiert, ist eine entsprechende Bemessung der zuzusetzenden Aktivkohle bzw. Dimensionierung eines entsprechenden Festbettfilters in einfacher Weise möglich.

## Beispiel 4

Das Beispiel bezieht sich auf eine bevorzugte Ausführungsform des erfindungsgemäßen Verfahrens, bei welcher der nach vorheriger Arsenfällung in Form von Calcium-Magnesium-Arsenaten verbleibende Restarsengehalt, ggfs. auch nach vorheriger Abtrennung von etwa vorhandenen Sulfat (vgl. EP-A1-250 626), mit einem Ionenaustauscher abgetrennt wird.

Es wurde ein Mischbett-Ionenaustauscher verwendet.

160 g (200 ml) Ionenaustauscherharz wurden in eine Glassäule (Durchmesser 2 cm), die an einem Ende mit einem Hahn versehen war, gepackt. Die Packungshöhe betrug 80 cm. Die Probenahme erfolgte nach einem genau definierten Durchsatz am Auslaß der Säule. Der Arsengehalt wurde durch Atomadsorptionsspektrometrie wie oben angegeben bestimmt.

Verfahrensbedingungen und Analysenwerte:

| | |
|---|---|
| Durchflußgeschwindigkeit: | 1,0 l/h |
| Bettaustausch: | 6-fach |
| pH Anfang: | 11,5 |
| $SO_4$ Anfang: | 50 mg/l |
| As Anfang: | 14 mg/l |
| Leitfähigkeit ($\chi$) Anfang: | 2,3 mS/cm . |

Nach 2 l Durchsatz (= 8 l/l Ionenaustauscherharz):

| | |
|---|---|
| pH: | 6,5 |
| $SO_4$: | nicht nachweisbar |
| As: | 2,5 $\mu$g/l |
| Leitfähigkeit ($\chi$): | 2,1 $\mu$S/cm . |

Die obigen Ergebnisse zeigen, daß eine Vollentsalzung stattfand. Neben Arsen wurden auch alle anderen vom Ionenaustauscher erfaßten Ionen ausgetauscht. Die geringe Leitfähigkeit läßt auf eine gute Reinwasserqualität schließen.

Eine Recyclingmöglichkeit des Arsens ist auf jeden Fall gegeben, wenn als Regeneriermittel für die beiden Ionenaustauscherharze des Mischbetts HCl eingesetzt wird. Hierdurch werden der Anionenaustauscher in die Cl-Form und der Kationenaustauscher in die H-Form übergeführt.

**Beispiel 5**

Das Beispiel bezieht sich auf die Restarsenabtrennung aus einem vorgereinigten Abwässer ähnlich wie in Beispiel 4, aus dem durch Vorfällung mit Kalkmilch und anschließende Fällung mit Calciumaluminat Sulfate weitgehend abgetrennt waren und das einen pH-Wert von 11,4 bis 11,7 aufwies.

Bei den Versuchen wurde ein stark basischer Anionenaustauscher vom Typ I verwendet, der in der Cl-Form vorlag.

Bei den Versuchen wurden verschiedene Harzmengen (50, 75 bzw. 200 g) eingesetzt, die jeweils in eine Säule von 2 cm Durchmesser gepackt wurden. Die Durchflußgeschwindigkeit und der daraus resultierende Bettaustausch wurden variiert. Die Regeneration erfolgte mit 200 g HCl 100 %/l Ionenaustauscherharz in Form einer 5- bis 8-%igen Lösung während 40 min, wobei das Regeneriermittel in Durchflußrichtung durch das Ionenaustauscherbett geleitet wurde.

Die erhaltenen Ergebnisse sind in Tabelle 8 zusammengefaßt:

Tabelle 8

| | | | | |
|---|---|---|---|---|
| Masse Harz (g) | 200 | 75 | 50 | 50 |
| Durchflußgeschwindigkeit (l/h) | 4,5 | 1 | 1,1 | 0,67 |
| Bettaustausch | 28-fach | 16-fach | 18-fach | 11-fach |
| $SO_4$ Anfang (mg/l) | 50 | 50 | 13 | 22 |
| As Anfang (mg/l) | 15 | 15 | 14,7 | 15,5 |
| χ Anfang (mg/l) | - | 4,45 | 3,2 | 2,72 |
| Arsengehalt (ppb) nach 1 l Durchsatz | 23,3 | 135 | - | 70,8 |
| " 2 l " | - | - | 10,1 | 69,2 |
| " 3 l " | 85,4 | 235 | - | 104,9 |
| " 4 l " | - | - | 8,7 | 84,4 |
| " 5 l " | 154,6 | 250 | - | 86,3 |
| " 6 l " | - | - | 10 | 101,0 |
| " 7 l " | 193,6 | 262 | 10,1 | - |
| " 10 l " | 233,7 | - | - | - |
| χ Ende (mS/cm) | - | 4,93 | 3,15 | 2,81 |

Sie zeigen, daß selbst bei einem Durchsatz von 7 l, was einer Belastung von 112 l/l Ionenaustauscherharz entsprach, noch kein Durchbruch von As auftrat. Dies entspricht einer ausgenntzten Kapazität von nahezu 2,5 g As/l Ionenaustauscherharz. Bei kleiner Durchflußgeschwindigkeit wurde die beste Reinigung erzielt.

Bei einer zu hohen Sulfatkonzentration kommt es zu einer entsprechenden Kapazitätsverminderung, da das Sulfation in der Affinitätsreihe (vgl. oben) vor dem Arsenation steht, so daß zu hohe Sulfatgehalte in einer vorgeschalteten Stufe beseitigt werden sollten, was nach den oben angegebenen Verfahren in einfacher Weise möglich ist.

In weiteren Versuchen wurde die Beladungskapazität des eingesetzten stark basischen Anionenaustauschers ermittelt.

Bedingungen:

| | |
|---|---|
| pH: | 11,5 |
| $SO_4$: | 20 mg/l |
| Leitfähigkeit (χ): | 2,0 mS/cm |
| As Anfang: | 13,4 mg/l |
| Durchsatz: | 1,2 l/h |
| Bettaustausch: | 8,5-fach |
| Durchgesetztes Volumen: | 35 l |
| As Ende: | 10 bis 119 ppb |
| Leitfähigkeit (χ) Ende: | 2,30 mS/cm |
| Harzmenge: | 100 g |
| Säulendimensionen: | Höhe 760 mm; Durchmesser 1,8 cm. |

Aus den oben angegebenen Ergebnissen errechnet sich eine Beladungskapazität (Nutzvolumenkapazität) von 4,1 bis 4,5 g As/l Ionenaustauscherharz, was etwa 160 bis 180 mval $AsO_4^{3-}$/l Ionenaustauscherharz entspricht.

Bei einem Ausgangsgehalt des Abwassers von 10 mg As/l lassen sich entsprechend mindestens 400 l Abwasser durch 1 l Ionenaustauscherharz reinigen.

Wie aus den obigen Ergebnissen ersichtlich ist, kann mit dem stark basischen Anionenaustauscherharz der Arsengehalt in Abwässern bis in den ppb-Bereich abgesenkt werden. Die Reinigungsleistung ist im wesentlichen von der Oxidationsstufe des Arsens, dem Durchsatz sowie der Arsenkonzentration abhängig.

In der Praxis ist eine noch höhere Beladungskapazität als 4,5 g As/l Ionenaustauscherharz ohne weiteres realisierbar.

Das Anionenaustauscherharz wird vorzugsweise in der Chloridform eingesetzt. Das beim Ionenaustausch freigesetzte Chlorid kann in vorteilhafter Weise als Kontrollgröße für die Überwachung bzw. Regelung des Ionenaustauschprozesses herangezogen werden.

Wird das Regenerat rückgeführt, kann ein wertvoller Rohstoff zurückgewonnen und in den Produktionsprozeß zurückgeleitet werden.

Aus dem Regenerat kann das Arsen ferner zu praktisch 100 % durch Sulfidfällung abgetrennt und gewonnen werden. Auf diese Weise sind sowohl eine Rückführung als auch eine anderweitige Verwendung, etwa zur Deponierung, möglich.

Mit dem Erfindungsgegenstand steht ein neuartiges Konzept der Entfernung von Arsen aus Abwässern zur Verfügung, aufgrund dessen dieser erheblich unweltbelastende Schadstoff erstmals in technisch-industriellem Maßstab weitgehend und unter außerordentlich wirtschaftlichen Bedingungen und in chemisch einfacher Weise aus dem Abwasser entfernt und in den Produktionsprozeß zurückgeführt werden kann.

Neben Arsen werden auch andere chemisch vergleichbare Anionen, wie Chromat und Phosphat, aus dem Abwasser entfernt.

Die Erfindungskonzeption führt insbesondere zu folgenden Vorteilen:

- Das erfindungsgemäße Verfahren ist auch auf schwer behandelbare, stark saure Abwässer anwendbar, beispielsweise aus Säurepolierprozessen der Glasindustrie, die mehr als 10 mg As/l enthalten und bei denen eine Abscheidung von Arsen durch Fällung mit Fe, Ca, etc. nur in äußerst unzureichendem Ausmaß möglich wäre.
- Durch Fällung in Form von Calcium-Magnesium-Arsenaten (As < 2 mg/l) und anschließende Aktivkohleadsorption sind Restgehalte an As < 1 mg/l möglich, wobei die Aktivkohle leicht regenerierbar ist.
- Die Kombination von Arsenfällung in Form von Calcium-Magnesium-Arsenaten und Arsenabtrennung mit einem Ionenaustauscher führt zu Restarsengehalten < 0,3 mg As/l, die in geeigneten Fällen im niederen ppb-Bereich liegen.
- Aus den Regeneratflüssigkeiten der Ionenaustauscherregeneration kann Arsen in einfacher Weise und quantitativ sulfidisch ausgefällt werden.
- Die Regeneratlösungen können in eine Kalkfällungsstufe rückgeführt werden oder "nachgeschärft" werden.

- Das erfindungsgemäße Verfahrenskonzept kann auch auf stark sulfathaltige Lösungen angewandt werden; durch vorgeschaltete Kalkfällung bei etwa pH 3 kann die Hauptmenge an Sulfat abgetrennt werden, ohne daß Arsen mit ausgefällt wird, was, ggfs. nach Waschen des entsprechenden $CaSO_4$-Schlamms, eine einfache Deponierung etwa auf Bauschutt- oder Hausmülldeponien erlaubt. Durch weitere Fällung in Form von Calciumaluminatsulfaten können $SO_4$-Restgehalte in wirksamer Weise entfernt werden. Vorher kann durch Fällung des Arsens in Form von Calcium-Magnesium-Arsenaten ein erheblicher Anteil des Arsens (pauschal etwa 50 bis etwa 80 %) selektiv ausgefällt werden, der auf Sonderdeponien verbracht oder anderweitig weiterverarbeitet werden kann.
- Tenside, die bei den meisten Abwässern in nicht unerheblichen Mengen vorliegen, stören weder vorgeschaltete Sulfatfällungen noch die Ausfällung der Calcium-Magnesium-Arsenate.

## Patentansprüche

**1.** Verfahren zur Abtrennung von Arsen aus Abwässern,
**gekennzeichnet durch** folgende Schritte:
(A1) Ausfällung des Arsens in Form von schwerlöslichen Calcium-Magnesium-Arsenaten durch Zusatz von Calcium- und Magnesiumverbindungen zum Abwasser bei einem pH-Wert von 2 bis 12 und vorzugsweise 9 bis 11 während einer Fällungsdauer von etwa 10 bis etwa 60 min und vorzugsweise etwa 30 min
und
(A2) Abtrennung der Calcium-Magnesium-Arsenate.

**2.** Verfahren nach Anspruch 1,
gekennzeichnet durch
(B1) anschließendes Inkontaktbringen des erhaltenen Abwassers aus A2 mit Aktivkohle bei einem pH-Wert von 2 bis 11 und vorzugsweise 2 bis 4
und
(B2) Abtrennung der beladenen Aktivkohle allein oder zusammen mit Fällungsprodukten.

**3.** Verfahren nach Anspruch 1 oder 2,
gekennzeichnet durch
(C1) anschließendes Inkontaktbringen des erhaltenen Abwassers aus A2 oder B2 mit einem Ionenaustauscher, vorzugsweise einem stark basischen Anionenaustauscher, bei einem pH-Wert von 2 bis 12 und vorzugsweise 7 bis 11,5
und ggfs.
(C2) Regeneration des Ionenaustauschers nach Erreichen der Beladungsgrenze.

**4.** Verfahren nach einem der Ansprüche 1 bis 3, gekennzeichnet durch Oxidation von im Abwasser enthaltenem As(III) zu $AsO_4^{3-}$ durch Zusatz eines Oxidationsmittels, vorzugsweise von $CaO_2$, $MgO_2$ oder $H_2O_2$, und bevorzugt bei einem pH-Wert im sauren Bereich, zum zu behandelnden Abwasser vor Schritt A1, B1 bzw. C1.

**5.** Verfahren nach einem der Ansprüche 1 bis 4, gekennzeichnet durch Abtrennung von im Abwasser vorhandenen Sulfationen aus dem Abwasser vor Schritt A1, B1 bzw. C1 oder nach Schritt A2, B2 bzw. C2 durch
(I) Ausfällung von $CaSO_4$ durch Zusatz von $Ca(OH)_2$ zum Abwasser, wobei bei Vornahme der Fällung
- vor Schritt A1 vorzugsweise bei pH 3 ± 1 bzw.
- vor Schritt B1 bzw. C1 vorzugsweise bei pH 3 ± 1 oder 8,0 bis 11,0 gearbeitet wird,

und
(II) Abtrennung des ausgefällten $CaSO_4$ und gegebenenfalls ausgefällter Schwermetallhydroxide
und/oder
(III) Ausfällung von schwerlöslichen Calciumaluminatsulfaten durch Zusatz von reaktivem Aluminiumoxid und/oder Calciumaluminaten zum Abwasser unter Einstellung und Halten des pH-Werts mit $Ca(OH)_2$ im Bereich von 11,2 bis 11,8
und
(IV) Abtrennung der ausgefällten Calciumaluminatsulfate.

6. Verfahren nach einem der Ansprüche 1 bis 5, gekennzeichnet durch Zusatz der Magnesiumverbindung(en) in Schritt A1 in solcher Menge und bis zu einem pH-Wert im alkalischen Bereich, daß auch Magnesiumhydroxid ausgefällt wird.

7. Verfahren nach einem der Ansprüche 1 bis 6, gekennzeichnet durch Verwendung von Kalkhydrat als Calciumverbindung und/oder von Magnesiumhydroxid als Magnesiumverbindung in Schritt A1.

8. Verfahren nach einem der Ansprüche 1 bis 6, gekennzeichnet durch Verwendung von Gemischen von Calcium- und Magnesiumsalzen, ggfs. unter Zusatz von $Ca(OH)_2$, in Schritt A1.

9. VerFahren nach einem der Ansprüche 1 bis 6, gekennzeichnet durch Verwendung von Magnesiumsalzen, vorzugsweise von Magnesiumchlorid, als Magnesiumverbindungen in Schritt A1.

10. Verfahren nach einem der Ansprüche 2 bis 9, gekennzeichnet durch gemeinsame Durchführung der Schritte B1 und B2 durch Inkontaktbringen des Abwassers mit der Aktivkohle in einem Festbett.

11. Verfahren nach einem der Ansprüche 2 bis 9, gekennzeichnet durch Einbringen von pulverförmiger Aktivkohle in das Abwasser in Schritt B1.

12. Verfahren nach einem der Ansprüche 2 bis 11, gekennzeichnet durch thermische Regeneration der beladenen Aktivkohle aus Schritt B2 unter Gewinnung des Arsens.

13. Verfahren nach einem der Ansprüche 1 bis 12, gekennzeichnet durch Waschen der Fällungsprodukte bzw. Feststoffe aus den Schritten A2, B2, II bzw. IV mit Wasser, ggfs. nach Einstellung des pH-Wertes, und Rückführung der Waschwässer in das eingesetzte Rohabwasser.

14. Verfahren nach einem der Ansprüche 3 bis 13, gekennzeichnet durch Rückführung der Regeneratlösungen aus Schritt C2 in die Stufe der Arsenfällung in Schritt A1 oder die Stufe der adsorptiven Abtrennung des Arsens in Schritt B1.

15. Verfahren nach einem der Ansprüche 3 bis 14, gekennzeichnet durch Verwendung eines Anionenaustauschers in der Chloridform in Schritt C1.

16. Verfahren nach einem der Ansprüche 3 bis 15, gekennzeichnet durch Verwendung eines Mischbett-Ionenaustauschers mit einem Anionenaustauscher in der Chloridform und einem Kationenaustauscher in der H-Form in Schritt C1 und Regeneration des Ionenaustauschers in Schritt C2 mit Salzsäure als Regeneriermittel.

17. Verfahren nach einem der Ansprüche 5 bis 16, gekennzeichnet durch Konstanthaltung eines pH-Werts von 3 ± 1 in Schritt I.

18. Verfahren nach einem der Ansprüche 4 bis 17, gekennzeichnet durch Vornahme der Oxidation des im Abwasser enthaltenen As(III) vor oder in dem für den nachfolgenden Fällungsschritt A1 vorgesehenen Fällungsreaktor.

19. Verfahren nach einem der Ansprüche 3 bis 16, gekennzeichnet durch Fällung des Arsens, vorzugsweise in Form von Arsensulfiden, aus den Regeneratlösungen aus Schritt C2, Abtrennung der Arsensulfide und Rückführung der erhaltenen Lösungen in die Stufe der Arsenfällung in Schritt A1 oder die Stufe der adsorptiven Abtrennung des Arsens in Schritt B1 oder Wiederverwendung als Regenerierlösungen.

20. Anwendung des Verfahrens nach einem der Ansprüche 1 bis 19 auf Abwässer, die Arsen, Sulfat und Schwermetalle enthalten, insbesondere auf bleihaltige Abwässer aus Säurepolierprozessen und Schleifereiabwässer der Bleikristall- und Kristallglasproduktion, auf sulfathaltige Abwässer aus Rauchgasentschwefelungsanlagen und der Akkumulatorenproduktion sowie Abwässer der Mikrochipherstellung.

## Claims

**1.** A process for the separation of arsenic from waste water,
characterised by the following steps:
(A1) precipitation of arsenic in the form of difficultly-soluble calcium magnesium arsenates by the addition of calcium and magnesium compounds to the waste water at a pH of 2 to 12 and preferably 9 to 11 during a precipitation time of about 10 to about 60 minutes and preferably about 30 minutes and
(A2) separation of the calcium magnesium arsenates.

**2.** A process according to claim 1,
characterised by
(B1) the waste water obtained from A2 then being brought into contact with activated carbon at a pH of 2 to 11 and preferably 2 to 4
and
(B2) separation of the charged activated carbon alone or together with precipitation products.

**3.** A process according to claim 1 or 2,
characterised by
(C1) the waste water obtained from A2 to B2 being then brought into contact with an ion exchanger, preferably a strongly basic anion exchanger, at a pH of 2 to 12 and preferably 7 to 11.5
and, if required
(C2) regeneration of the ion exchanger after the charging limit has been reached.

**4.** A process according to any one of claims 1 to 3, characterised by oxidation of As(III) contained in the waste water to $AsO_4^{3-}$ by addition of an oxidant, preferably $CaO_2$, $MgO_2$ or $H_2O_2$, and preferably at a pH in the acid range, to the waste water for treatment before steps A1, B1 and C1.

**5.** A process according to any one of claims 1 to 4, characterised by separation of sulphate ions in the waste water before steps A1, B1 and C1 or after steps A2, B2 and C2 by
(I) precipitation of $CaSO_4$ by addition of $Ca(OH)_2$ to the waste water, the precipitation being carried out
- before step A1 preferably at pH 3 ± 1 and
- before steps B1 and C1 preferably at pH 3 ± 1 or 8.0 to 11.0,

and
(II) separation of the precipitated $CaSO_4$ and any precipitated heavy metal hydroxides
and/or
(III)precipitation of difficultly-soluble calcium aluminate sulphates by the addition of reactive aluminium oxide and/or calcium aluminates to the waste water, the pH being adjusted and maintained in the range from 11.2 to 11.8 by means of $Ca(OH)_2$
and
(IV) separation of the precipitated calcium aluminate sulphates.

**6.** A process according to any one of claims 1 to 5, characterised by the addition of the magnesium compound or compounds in step A1 in a quantity such and up to a pH in the alkaline range such that magnesium hydroxide is also precipitated.

**7.** A process according to any one of claims 1 to 6, characterised by the use of hydrate of lime as a calcium compound and/or magnesium hydroxide as a magnesium compound in step A1.

**8.** A process according to any one of claims 1 to 6, characterised by the use of mixtures of calcium and magnesium salts, if required with the addition of $Ca(OH)_2$, in step A1.

**9.** A process according to any one of claims 1 to 6, characterised by the use of magnesium salts, preferably magnesium chloride, as magnesium compounds in step A1.

**10.** A process according to any one of claims 2 to 9, characterised by steps B1 and B2 being performed jointly by the waste water being brought into contact with the activated carbon in a solid bed.

**11.** A process according to any one of claims 2 to 9, characterised by the introduction of activated carbon in powder form into the waste water in step B1.

**12.** A process according to any one of claims 2 to 11, characterised by thermal regeneration of the charged activated carbon from step B2, the arsenic being recovered.

**13.** A process according to any one of claims 1 to 12, characterised by washing of the precipitation products or solids from steps A2, B2, II and IV with water, if required after adjustment of the pH, and recycling of the washing water to the untreated waste water used.

**14.** A process according to any one of claims 3 to 13, characterised by recycling of the regenerate solutions from step C2 to the arsenic precipitation stage in step A1 or the arsenic adsorptive separation stage in step B1.

**15.** A process according to any one of claims 3 to 14, characterised by use of an anion exchanger in chloride form in step C1.

**16.** A process according to any one of claims 3 to 15, characterised by the use of a mixed bed ion exchanger comprising an anion exchanger in chloride form and a cation exchanger in the H-form in step C1 and regeneration of the ion exchanger in step C2 with hydrochloric acid as regenerant.

**17.** A process according to any one of claims 5 to 16, characterised in that the pH is kept constant at 3 ± 1 in step 1.

**18.** A process according to any one of claims 4 to 17, characterised in that the As(III) contained in the waste water is oxidised before or in the precipitation reactor provided for the next precipitation step A1.

**19.** A process according to any one of claims 3 to 16, characterised by precipitation of the arsenic, preferably in the form of arsenic sulphides, from the regenerate solutions from step C2, separation of the arsenic sulphides and recycling of the resulting solutions to the arsenic precipitation stage in step A1 or the arsenic adsorptive separation stage in step B1 or re-use as regenerating solutions.

**20.** Application of the process according to any one of claims 1 to 19 to waste water containing arsenic, sulphate and heavy metals, more particularly lead-containing waste water from acid polishing processes and waste water from grinding processes in lead-crystal and cut-glass production, to sulphate-containing waste water from flue gas desulphurisation plant, and from accumulator production, and also waste water from microchip production.

## Revendications

**1.** Procédé dur séparer l'arsenic contenu dans des eaux résiduaires, caractérisé en ce qu'il comprend les stades opératoires suivants : (1) précipitation de l'arsenic à l'état d'arséniates de calcium-magnésium peu solubles par addition aux eaux résiduaires de dérivés du calcium et du magnésium à un pH de 2 à 12, de préférence de 9 à 11, avec une durée de précipitation d'environ 10 à 60 min, de préférence environ 30 min et (A2) séparation des arséniates de calcium-magnésium.

**2.** Procédé selon la revendication 1, caractérisé en ce que (B1) on met les eaux résiduaires sortant de l'opération A2) en contact avec du charbon actif, à un pH de 2 à 11, de préférence de 2 à 4 et (B2) on sépare le charbon actif chargé, seul ou avec les produits de précipitation.

**3.** Procédé selon la revendications 1 ou 2, caractérisé en ce que (C1) on met les eaux résiduaires sortant de l'opération A2) ou B2) en contact avec un échangeur d'ions, de préférence un échangeur d'anions fortement basique, à un pH de 2 à 12, de préférence de 7 à 11,5, et éventuellement (C2) on régénère l'échangeur d'ions lorsqu'on a atteint la limite de charge.

**4.** Procédé selon une des revendications 1 à 3, caractérisé en ce que l'on oxyde l'As-III contenu dans les eaux résiduaires en $AsO_4^{-3}$ par addition d'un agent oxydant, de préférence $CaO_2$, $MgO_2$ ou $H_2O_2$, et de préférence à un pH acide, aux eaux résiduaires à traiter avant le stade A1), B1) ou C1).

5. Procédé selon l'une des revendications 1 à 4, caractérisé en ce que l'on sépare les ions sulfates contenus dans les eaux résiduaires avant le stade A1), B1) ou C1) ou après le stade A2), B2) ou C2)
   (I) par précipitation de $CaSO_4$ par addition de $Ca(OH)_2$ aux eaux résiduaires,
   - de préférence à un pH de 3 ± 1 lorsqu'on précipite avant le stade A1) ou
   - de préférence à un pH de 3 ± 1 ou de 8,0 à 11,0 lorsqu'on précipite avant le stade B1) ou le stade C1), et

   (II) on sépare le $CaSO_4$ qui a précipité et le cas échéant les hydroxydes de métaux lourds qui ont précipité, et/ou
   (III) on précipite les aluminates-sulfates de calcium peu solubles par addition d'alumine réactive et/ou d'aluminate de calcium aux eaux résiduaires, avec réglage et maintien du pH dans l'intervalle de 11,2 à 11,8 à l'aide de $Ca(OH)_2$ et (IV) on sépare les aluminates-sulfates de calcium qui ont précipité.

6. Procédé selon l'une des revendications 1 à 5, caractérisé en ce que l'on ajoute le ou les dérivés du magnésium au stade A1) en quantité telle et jusqu'à pH alcalin, qu'il y ait également précipitation d'hydroxyde de magnésium.

7. Procédé selon l'une des revendications 1 à 6, caractérisé en ce que l'on utilise de la chaux hydratée en tant que dérivé du calcium et/ou de l'hydroxyde de magnésium en tant que dérivé du magnésium au stade A1).

8. Procédé selon l'une des revendications 1 à 6, caractérisé en ce que l'on utilise des mélanges de sels de calcium et de magnésium, éventuellement avec adjonction de $Ca(OH)_2$ au stade A1).

9. Procédé selon l'une des revendications 1 à 6, caractérisé en ce que l'on utilise des sels de magnésium, de préférence du chlorure de magnésium, en tant que dérivés du magnésium au stade A1).

10. Procédé selon l'une des revendications 2 à 9, caractérisé en ce que l'on combine les stades opératoires B1) et B2) par mise en contact des eaux résiduaires avec le charbon actif en lit fixe.

11. Procédé selon l'une des revendications 2 à 9, caractérisé en ce que l'on introduit du charbon actif en poudre dans les eaux résiduaires au stade B1).

12. Procédé selon l'une des revendications 2 à 11, caractérisé en ce que l'on soumet le charbon actif chargé au stade B2) à une régénération à la chaleur avec récupération de l'arsenic.

13. Procédé selon l'une des revendications 1 à 12, caractérisé en ce qu'on lave les produits de précipitation ou matières solides des stades opératoires A2), B2), II) et IV) à l'eau, éventuellement après réglage du pH, et on recycle les eaux de lavage dans les eaux résiduaires brutes à traiter.

14. Procédé selon l'une des revendications 3 à 13, caractérisé en ce que l'on recycle les solutions régénérées du stade opératoire C2) au stade de précipitation de l'arsenic en A1) ou au stade de séparation de l'arsenic par adsorption en B1).

15. Procédé selon l'une des revendications 3 à 14, caractérisé en ce que l'on utilise un échangeur d'anions sous la forme chlorure au stade C1).

16. Procédé selon l'une des revendications 3 à 15, caractérisé en ce que l'on utilise un échangeur d'ions en lit mélangé avec un échangeur d'anions sous la forme chlorure et un échangeur de cations sous la forme H au stade C1) et on régénère l'échangeur d'ions au stade C2) en utilisant de l'acide chlorhydrique en tant qu'agent régénérant.

17. Procédé selon l'une des revendications 5 à 16, caractérisé en ce que l'on maintient le pH constant à 3 ± 1 au stade I.

18. Procédé selon l'une des revendications 4 à 17, caractérisé en ce que l'on oxyde l'As-III contenu dans les eaux résiduaires avant le réacteur de précipitation prévu pour l'opération de précipitation suivante

A1) ou dans ce réacteur.

**19.** Procédé selon l'une des revendications 3 à 16, caractérisé en ce que l'on précipite l'arsenic, de préférence à l'état de sulfures d'arsenic, à partir des solutions de produits régénérés provenant du stade opératoire C2), on sépare les sulfures d'arsenic et on recycle les solutions obtenues au stade de précipitation de l'arsenic A1) ou au stade de séparation de l'arsenic par adsorption B1) ou bien on les réutilise en tant que solutions régénérées.

**20.** Application du procédé selon l'une des revendications 1 à 19 au traitement d'eaux résiduaires contenant de l'arsenic, des sulfates et des métaux lourds, en particulier à des eaux résiduaires contenant du plomb, provenant d'opérations de polissage à l'acide et à des eaux résiduaires de meulage de la production de cristal de plomb et de semi-cristal, à des eaux résiduaires contenant des sulfates sortant d'installations de désulfuration de gaz de fumée et de la production d'accumulateurs et à des eaux résiduaires provenant de la fabrication de "puces".

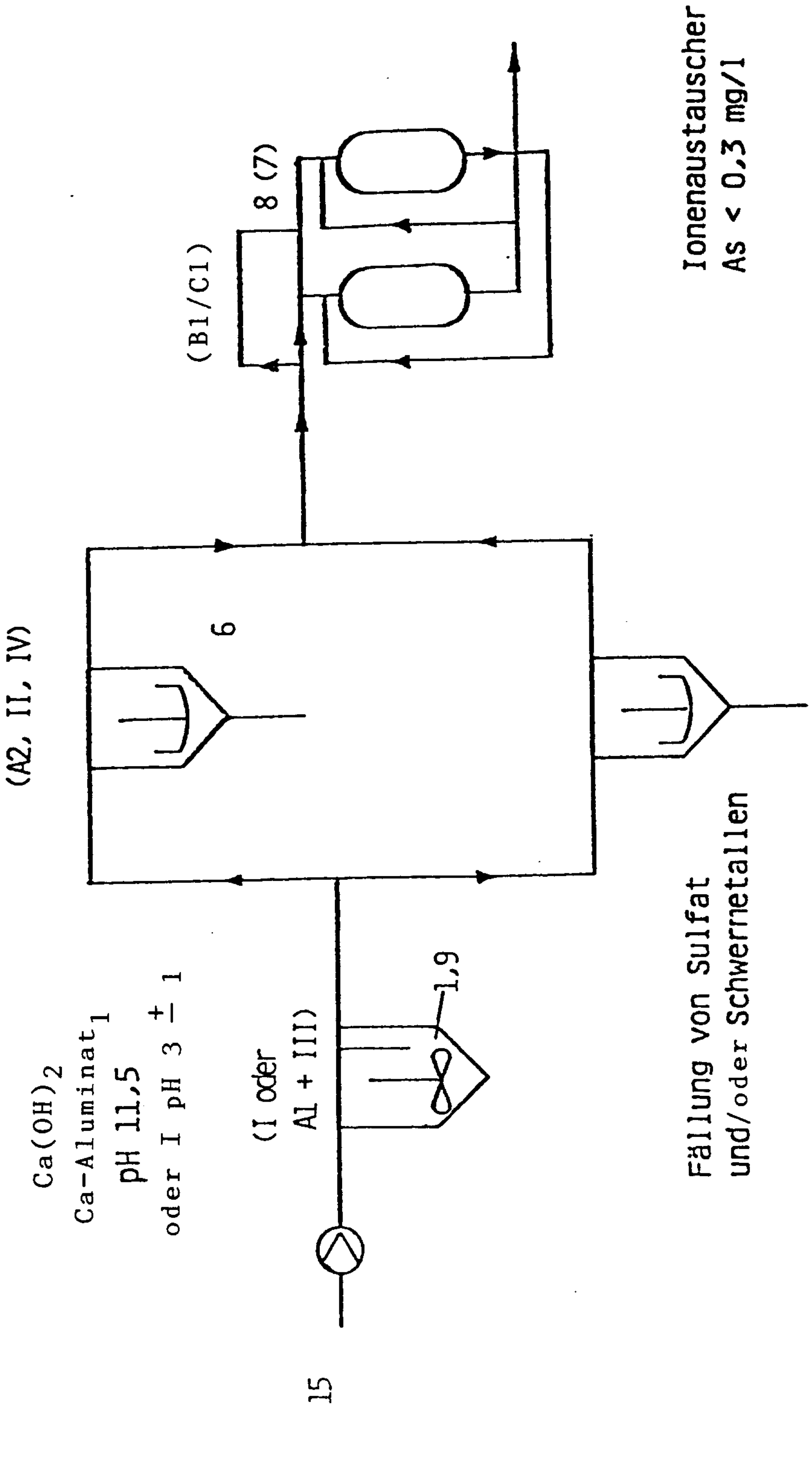
Ca(OH)2
Ca-Aluminat1
pH 11,5
oder I pH 3 ± 1
(I oder
Al + III)
1,9
15
(A2, II, IV)
6
Fällung von Sulfat
und/oder Schwermetallen
(B1/C1)
8 (7)
Ionenaustauscher
As < 0,3 mg/l

Abb. 1

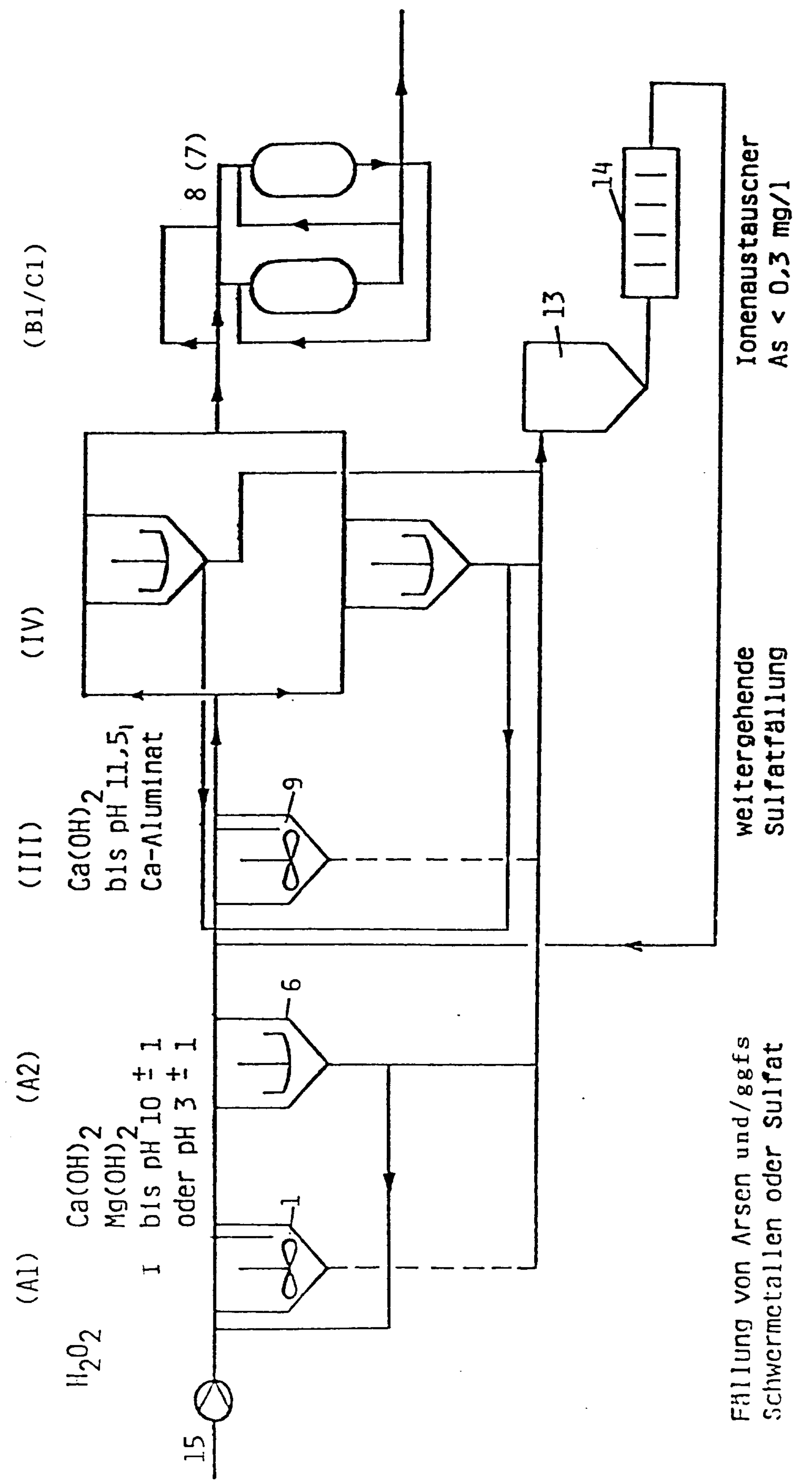
15
$H_2O_2$
(A1)
I
1
Ca(OH)2
Mg(OH)2
bis pH 10 ± 1
oder pH 3 ± 1
(A2)
6
(III)
9
Ca(OH)2
bis pH 11,5
Ca-Aluminat
(IV)
(B1/C1)
8 (7)
13
14
Fällung von Arsen und/ggfs
Schwermetallen oder Sulfat
weitergehende
Sulfatfällung
Ionenaustauscher
As < 0,3 mg/l

Abb. 2

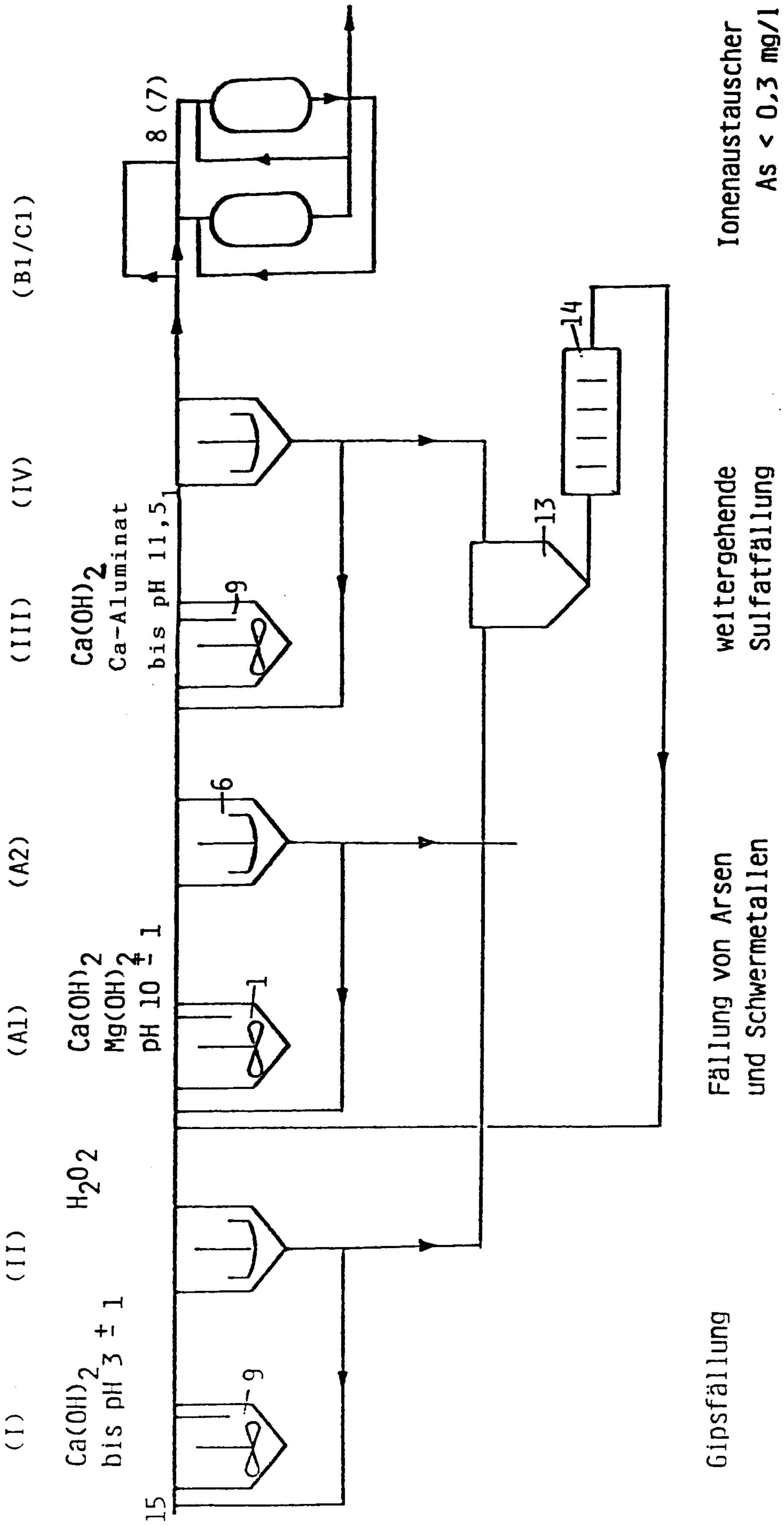
(I)
(II)
(A1)
(A2)
(III)
(IV)
(B1/C1)
Ca(OH)2
bis pH 3 ± 1
H2O2
Ca(OH)2
Mg(OH)2
pH 10 ± 1
Ca(OH)2
Ca-Aluminat
bis pH 11,5
15
9
1
6
9
13
14
8 (7)
Gipsfällung
Fällung von Arsen
und Schwermetallen
weitergehende
Sulfatfällung
Ionenaustauscher
As < 0,3 mg/l

Abb. 3

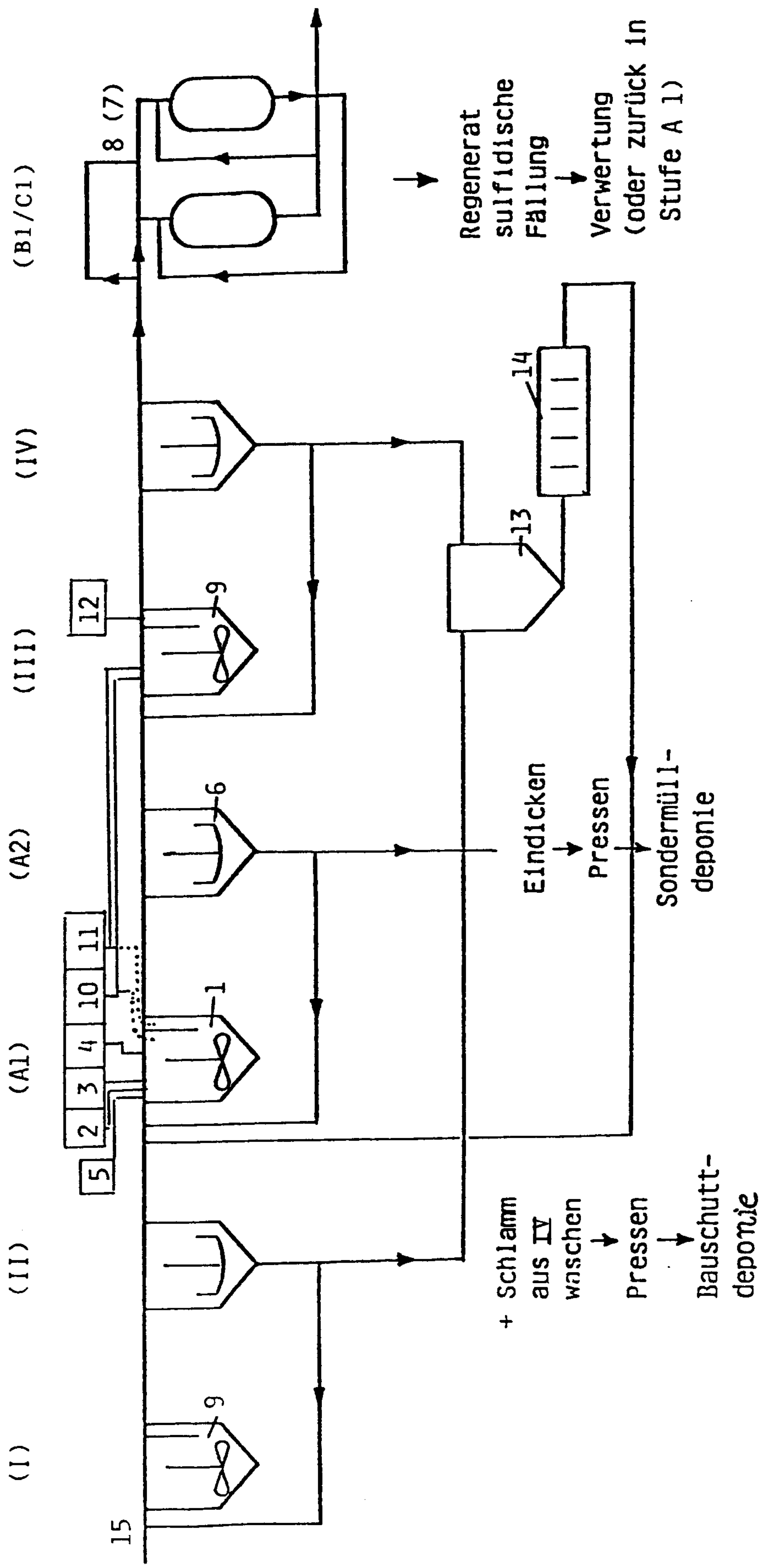
(I)
(II)
(A1)
(A2)
(III)
(IV)
(B1/C1)
15
9
5
2
3
4
10
11
1
6
12
9
13
14
8 (7)
Regenerat
sulfidische
Fällung
Verwertung
(oder zurück in
Stufe A 1)
Eindicken
Pressen
Sondermüll-
deponie
+ Schlamm
aus IV
waschen
Pressen
Bauschutt-
deponie

Abb. 4